# DEMANDE DE BREVET EUROPEEN

(11) **EP 1 283 599 A1**
(43) Date de publication de la demande: **12.02.2003**
(21) Numéro de dépôt: 02291763.7
(22) Date de dépôt: 12.07.2002
(51) Int. Cl.: H04B 1/40

(54) **Système d'émission/réception pour téléphone mobile multibande et multimode**

(30) Priorité: 09.08.2001 FR 0110779
(71) Demandeur: SAGEM S.A., 75015 Paris (FR)
(72) Inventeur: Romao, Fernando, 78360 Montesson (FR)
(74) Mandataire: Maillet, Alain

(57) **Abrégé**

L'invention concerne un système d'émission/ réception pour un terminal mobile apte à pouvoir émettre et recevoir dans une pluralité de bandes de fréquence. Il comprend une pluralité de diplexeurs (410,415) en cascade, la voie commune du premier diplexeur (410) étant connectée à une antenne (400) dudit terminal mobile et la voie commune de chaque diplexeur suivant étant connectée à une première voie du diplexeur qui le précède, la seconde voie de chaque diplexeur ainsi que la première voie du dernier diplexeur (415) étant connectées à des moyens de duplexage temporel ou fréquentiel (430,440,450) assurant l'émission et la réception dans l'une desdites bandes de fréquence.

## Description

La présente invention concerne de manière générale un dispositif d'émission/réception multibande. Elle s'applique en particulier à un terminal de télécommunication multibande pouvant opérer en mode UMTS compressé.

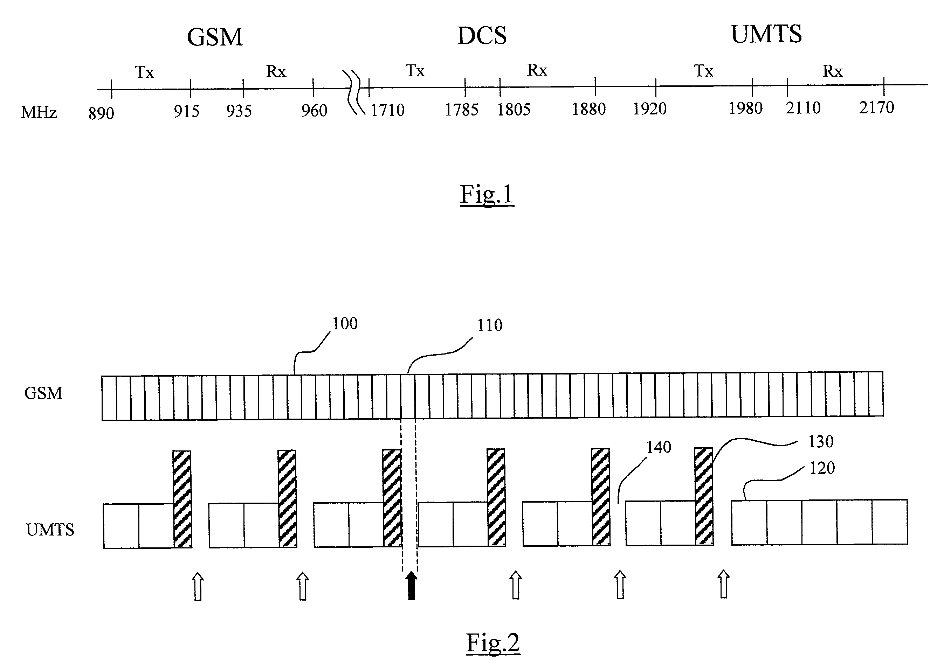

Pour des raisons de coût, le déploiement du système de téléphonie mobile UMTS (Universal Mobile Telecommunication Sytem) ne pourra se faire que progressivement. En absence de couverture UMTS complète, il sera nécessaire d'assurer la mobilité entre l'UMTS et les systèmes existants notamment les systèmes GSM (Global System for Mobile communication) et DCS 1800 (que nous désignerons ci-après simplement par DCS). Cette mobilité inter-système devra permettre aux usagers de passer du système UMTS au système GSM ou DCS et réciproquement, non seulement en mode veille (re-sélection) mais aussi en cours de communication (hand-over inter-système). Les bandes de fréquence utilisées par les système précités sont indiqués en Fig. 1. Ainsi, un terminal mobile GSM transmet (sur la voie montante) dans la bande 890-915 MHz et reçoit (sur la voie descendante) dans la bande 935-960 MHz avec un espacement du duplex de 45 MHz. De même, un terminal DCS transmet dans la bande 1710-1785 MHz et reçoit dans la bande 1805-1880 MHz. Enfin, la voie montante de l'UMTS/ FDD (Frequency Division Duplex) occupe la bande 1920-1980 MHz alors que la voie descendante occupe la bande 2110-2170 MHz.

Le choix de connexion à tel ou tel système suppose que le terminal mobile soit capable d'effectuer des mesures dans plusieurs bandes de réception. A cette fin, il est prévu dans le système UMTS/ FDD des « trous » dans la transmission de données sur la voie descendante de manière à ce qu'un terminal mobile puisse effectuer des mesures dans la bande GSM ou DCS pendant qu'il est en cours de communication en mode UMTS/ FDD. Ce mode de transmission particulier est appelé mode compressé. En raison de la proximité de la bande de réception DCS (Rx DCS) et de la bande transmission UMTS (Tx UMTS), il est également prévu un mode compressé sur la voie montante UMTS. Dans ce cas, les trous de transmission affectent simultanément les deux voies. La Fig. 2 illustre le mode transmission compressé en UMTS/ FDD et son utilisation pour des mesures en réception GSM. Selon ce mode, des trous de transmission de la taille de 1 à 7 intervalles de transmission (IT) sont créés dans la trame UMTS qui en comporte 15. Sur la Fig. 2, la référence 140 indique un trou de transmission et 120 une trame normale. Un trou de transmission est obtenu en comprimant une trame normale dans une durée réduite, par exemple en réduisant le facteur d'étalement (Spreading Factor) pour ladite trame. Afin de maintenir la qualité de la communication, une trame compressée, telle que celle repésentée en 130, est émise, comme ilustré sur la Fig., avec une puissance d'émission supérieure à celle d'une trame normale.

En mode compressé, le système mesure pendant les trous de transmission le niveau sur le canal BCCH (Broadcast Control CHannel) d'une cellule GSM. Etant donné que les trames GSM, 100, ne sont pas synchrones avec les trames UMTS, la mesure n'est pas possible à chaque trou de transmission. On a représenté par une flèche noire une mesure sur le canal BCCH pendant une correspondance temporelle entre une trame GSM, 110, et un trou de transmission.

L'augmentation de la puissance d'émission pendant une trame compressée peut avoir des conséquences particulièrement néfastes. Tout d'abord elle augmente le niveau d'interférence intra-cellulaire, ce qui est préjudiciable à la qualité des communications. Ensuite, elle perturbe la boucle de contrôle de puissance d'émission du terminal mobile et peut conduire à des instabilités et à des oscillations de puissance. Il serait donc souhaitable que, lors d'un trou de transmission sur la voie descendante, la transmission (Tx-UMTS) sur la voie montante ne soit pas interrompue. Bien que la norme UMTS autorise un tel fonctionnement, les systèmes d'émission/ réception multibande de l'état de la technique ne permettent pas de l'exploiter pleinement. En particulier, comme nous le verrons plus loin, ils ne permettent pas d'effectuer une mesure dans la bande de réception DCS et de transmettre simultanément en mode UMTS. Autrement dit, une mesure dans la bande DCS suppose actuellement que la voie montante opère également en mode compressé.

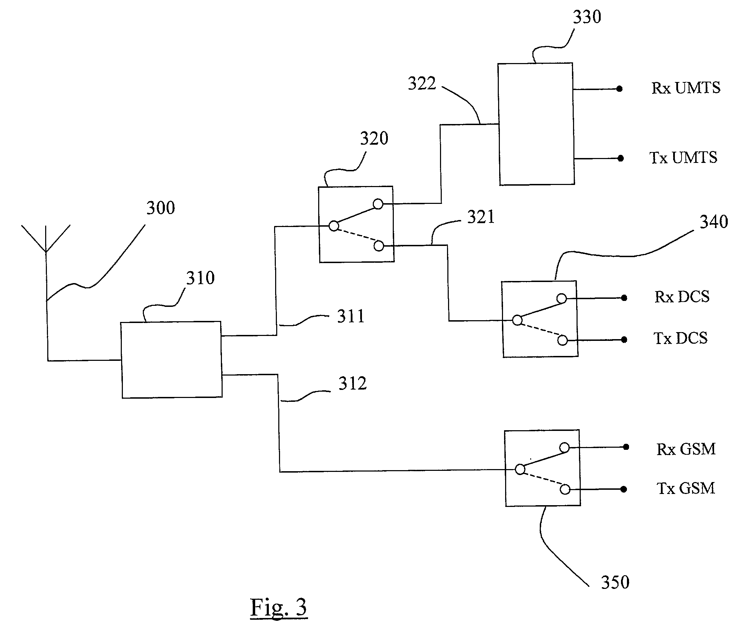

La Fig. 3 représente un système d'émission/réception tri-bande connu de l'état de la technique. Ce système peut fonctionner alternativement en mode GSM, en mode DCS ou en mode UMTS. Un diplexeur 310, relié à l'antenne 300, sépare la bande GSM (890-960 MHz) des bandes DCS et UMTS (1710-2170 MHz). On rappelle qu'un diplexeur est un dispositif permettant à deux systèmes d'émission/réception distincts opérant dans des bandes fréquentielles disjointes d'utiliser simultanément la même antenne. Un diplexeur est typiquement constitué de deux filtres passe-bande correspondant respectivement aux bandes d'émission/ réception des deux systèmes. En général, ces filtres n'ont pas besoin d'être très sélectifs car les bandes en question sont éloignées l'une de l'autre. Par exemple, dans le cas présent, la bande GSM est éloignée de plus de 750 MHz des bandes DCS et UMTS. La sortie 312 du diplexeur, correspondant à la bande de plus basse fréquence, c'est-à-dire au signal GSM, est connectée au point commun d'un premier commutateur 350 dit à « une entrée / deux sorties » ou encore SPDT (pour Single Pole Double Throw). Ce commutateur est en fait un duplexeur temporel : le point commun (ou « entrée ») est relié, selon l'état du commutateur, soit à l'entrée (notée Rx GSM) du récepteur GSM, soit à la sortie (notée Tx GSM) de l'émetteur GSM. Le commutateur 350 permet d'éliminer l'influence du circuit de réception GSM lors de l'émission GSM.

La sortie 311 du diplexeur 310 correspondant à la bande de plus haute fréquence, c'est-à-dire aux signaux DCS et UMTS, est connectée au point commun d'un second commutateur 320, également du type à « une entrée/ deux sorties ». Selon l'état du commutateur 320, la sortie 311 est reliée au point commun 322 du duplexeur 330 ou au point commun 321 d'un troisième commutateur 340. On rappelle qu'un duplexeur est un dispositif permettant à une voie d'émission et une voie de réception de partager simultanément une même antenne (ici via le commutateur 320 et le diplexeur 310). Un duplexeur peut opérer dans le domaine fréquentiel (par ex. duplexeur 330) ou dans le domaine temporel (par ex. commutateur 340). Le duplexeur 330 assure à la fois la transmission du signal d'antenne à l'entrée (notée Rx UMTS) du récepteur UMTS et la transmission sur l'antenne du signal de sortie (notée Tx UMTS) de l'émetteur UMTS. D'autre part, le point commun du troisième commutateur 340 est relié, selon l'état de ce dernier, soit à l'entrée (notée Rx DCS) d'un récepteur DCS, soit à la sortie (notée Tx DCS) d'un émetteur DCS.

Le système d'émission/ réception représenté autorise à la fois une réception dans la bande GSM et une émission dans la bande UMTS. En effet, lorsque les commutateurs 320 et 350 sont dans la position indiquée sur la Fig., il est possible, d'une part, de transmettre un signal dans la bande UMTS via le duplexeur 330, le commutateur 320 et le diplexeur 310 et, d'autre part, de recevoir un signal dans la bande GSM à travers le diplexeur 310 et le commutateur 350. En revanche, la présence du commutateur 320 ne permet pas au système d'émission/ réception à la fois de transmettre dans la bande UMTS et de recevoir dans la bande DCS.

Le but de l'invention est de proposer un système d'émission/ réception capable de fonctionner dans la bande UMTS comme dans la bande DCS et permettant d'effectuer une mesure dans la bande de réception DCS sans avoir à interrompre la transmission sur la voie montante UMTS.

De manière plus générale, l'objectif de l'invention est de proposer un système d'émission réception multi-standard permettant de transmettre dans une bande d'émission d'un standard et de recevoir dans une bande de réception d'un autre standard.

Cet objectif est réalisé par un système d'émission / réception pour un terminal mobile apte à pouvoir émettre et recevoir dans une pluralité de bandes de fréquence, comprenant une pluralité de diplexeurs en cascade, la voie commune du premier diplexeur étant connectée à une antenne dudit terminal mobile et la voie commune de chaque diplexeur suivant étant connectée à une première voie du diplexeur qui le précède, la seconde voie de chaque diplexeur ainsi que la première voie du dernier diplexeur étant connectées à des moyens de duplexage temporel ou fréquentiel assurant l'émission et la réception dans l'une desdites bandes de fréquence.

Avantageusement, l'un au moins desdits diplexeurs présente pour au moins l'une de ses première et seconde voies une fonction de transfert commutable.

Selon un exemple de réalisation, le système comprend deux diplexeurs en cascade, une première voie du premier diplexeur étant connectée à la voie commune du second diplexeur et une première voie dudit second diplexeur étant connectée à des premiers moyens de duplexage assurant simultanément l'émission et la réception dans une première bande de fréquence, la seconde voie du second diplexeur étant connectée à des seconds moyens de duplexage assurant alternativement l'émission et la réception dans une seconde bande de fréquence et la seconde voie du premier diplexeur étant connectée à des troisièmes moyens de duplexage assurant alternativement l'émission et la réception dans une troisième bande de fréquence.

Par exemple, la première bande est la bande d'émission/ réception UMTS, la seconde bande est la bande d'émission/ réception DCS et la troisième bande est la bande d'émission/ réception GSM.

Le second diplexeur présente alors sur sa première voie une fonction de transfert commutable entre celle d'un premier filtre passe-bande laissant passer la bande UMTS et celle d'un second filtre passe-bande laissant seulement passer la sous-bande de la voie montante UMTS. De même, il présente pour sa seconde voie une fonction de transfert commutable entre celle d'un troisième filtre passe-bande laissant passer la bande DCS et celle d'un quatrième filtre passe-bande laissant seulement passer la sous-bande de la voie descendante DCS.

La fonction de transfert du second diplexeur pour sa première voie est celle du premier filtre passe-bande lorsque le téléphone mobile opère en mode UMTS seul et celle du second filtre passe bande lorsque le télephone mobile opère en mode UMTS compressé.

De même, la fonction de transfert du second diplexeur pour sa seconde sortie est celle du troisième filtre passe-bande lorsque le téléphone mobile opère en mode DCS seul et celle du quatrième filtre passe-bande lorsque le terminal mobile opère en mode UMTS compressé.

Avantageusement, au moins le second diplexeur est réalisé au moyen de filtres à ondes de surface ou de filtres diélectriques.

Selon une variante de réalisation, au moins l'un desdits diplexeurs est équipé de commutateurs permettant de déconnecter sa première et/ ou seconde voie et/ou sa voie commune. En outre, au moins l'un des diplexeurs peut être équipé d'un commutateur permettant de court-circuiter sa voie commune avec l'une de ses première et seconde voies.

Les caractéristiques de l'invention mentionnées ci-dessus, ainsi que d'autres, apparaîtront plus clairement à la lecture de la description d'exemples de réalisation, faite en relation avec les figures jointes parmi lesquelles :
La Fig. 1 représente schématiquement les bandes des systèmes GSM, DCS et UMTS;
La Fig. 2 illustre une mesure dans la bande de réception GSM lorsque le terminal mobile opère en mode UMTS compressé ;
La Fig. 3 représente schématiquement un système d'émission/ réception multibande connu de l'état de la technique;
La Fig. 4 représente un système d'émission/ réception multibande selon une mode de réalisation de l'invention ;
La Fig. 5 représente les caractéristiques d'un diplexeur pour différentes variantes de réalisation de l'invention ;
La Fig. 6 représente un système d'émission/ réception multibande selon un second mode de réalisation de l'invention;
La Fig. 7 représente la structure d'un diplexeur connu de l'état de la technique ;
La Fig. 8 représente une modification dudit diplexeur utile à la réalisation de l'invention ;
La Fig. 9A représente un diplexeur équipé de commutateurs sur ses différentes voies, utile à une variante de réalisation de l'invention ;
La Fig. 9B représente un exemple de réalisation du diplexeur équipé de commutateurs de la Fig. 9A.

L'idée à la base de l'invention est de prévoir dans le système d'émission/réception une pluralité d'étages de diplexage, la bande passante d'une voie d'un étage de diplexage de rang n incluant celles des voies de l'étage n+1. Cette architecture permet de séparer, comme on le verra plus loin, les différentes bandes de fonctionnement du système d'émission/ réception multibande.

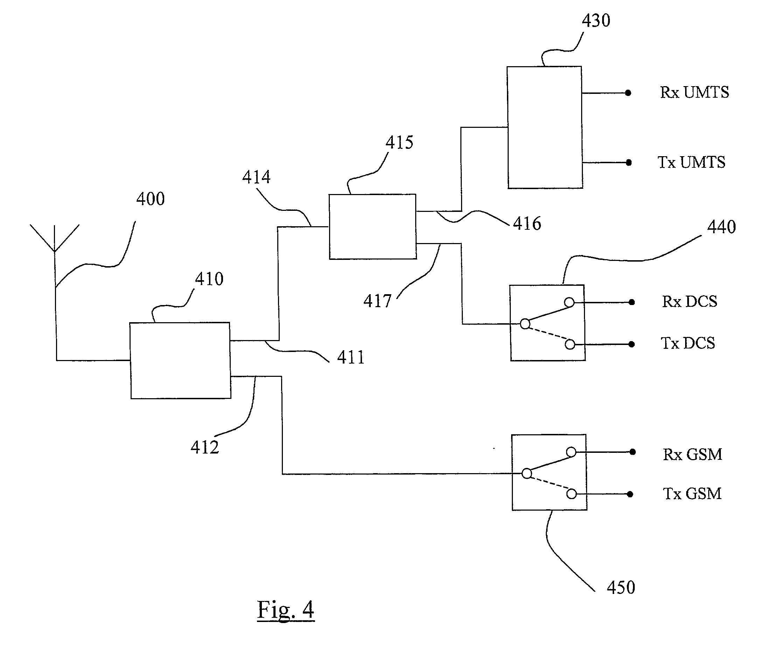

Un système d'émission/ réception multibande GSM/DSC/UMTS selon un premier mode de réalisation de l'invention est représenté en Fig. 4. Le sytème comprend un premier diplexeur 410 connecté à l'antenne 400 ayant pour fonction de séparer la bande GSM de la bande DCS/UMTS. Comme on l'a vu plus haut, les filtres passe-bande de ce diplexeur n'ont pas besoin d'être sélectifs étant donné l'éloignement des bandes GSM et DCS/UMTS. La voie de plus basse fréquence 412 du diplexeur 410 est connectée au point commun (ou « entrée ») d'un commutateur 450 du type « une entrée / deux sorties », les sorties du commutateur 450 étant reliées respectivement à l'entrée d'un récepteur GSM (Rx GSM) et à la sortie d'un émetteur GSM (Tx GSM). La sortie haute fréquence 411 du diplexeur 410 est reliée à la voie commune 414 d'un second diplexeur 415. Ce dernier a pour fonction de séparer la bande DCS d'une part et la bande UMTS d'autre part. Etant donné la proximité des bandes DCS (1710-1880 MHz) et UMTS (1920-2170 MHz), les filtres passe-bande du diplexeur sont choisis très sélectifs en fréquence. Ils seront avantageusement réalisés par des filtres à ondes de surface ou SAW (Surface Acoustic Waves) permettant d'obtenir des ordres élévés. Alternativement, ils pourront être réalisés sous la forme de filtres diélectriques, de manière connue en soi. La voie de plus basse fréquence 417 du diplexeur 415 est connectée au point commun d'un commutateur 440 du type « une entrée / deux sorties ». Les « sorties » de ce commutateur sont reliées respectivement à l'entrée (Rx DCS) d'un récepteur DCS et à la sortie (Tx DCS) d'un émetteur DCS.

La voie de plus haute fréquence 416 du diplexeur 415 est réliée au point commun d'un duplexeur 430 assurant simultanément la transmission d'un signal UMTS, capté par l'antenne, vers le récepteur UMTS (Rx UMTS) et celle d'un signal UMTS, émis par l'émetteur UMTS (Tx UMTS), vers la même antenne.

Selon une variante de réalisation avantageuse les voies 411, 412 et 416, 417 des premier et second diplexeurs ou de l'un d'eux seulement sont pourvus de simples commutateurs de type « marche/ arrêt » comme décrit plus loin. Il est ainsi possible d'isoler certaines parties du système non utilisées dans un mode de fonctionnement donné et d'éviter des pertes dues aux fuites dans les diplexeurs. Par exemple, si le système fonctionne en mode GSM seul, le commutateur sur la voie 411 sera ouvert et celui sur la voie 412 sera fermé. S'il fonctionne en mode DCS seul, les commutateurs sur les voies 412 et 416 seront ouverts et les commutateurs sur les voies 411 et 417 seront fermés. Enfin, s'il fonctionne en mode UMTS seul, les commutateurs sur les sorties 412 et 417 seront ouverts et ceux sur les sorties 411 et 416 seront fermés. En outre, des commutateurs de type « marche/ arrêt » pourront être prévus pour court-circuiter un diplexeur s'il n'est pas utilisé, de manière à réduire encore les pertes. Ainsi, par exemple, en mode DCS seul on pourra relier directement la voie commune 414 à la voie 417 et, en mode UMTS seul, la voie commune 414 à la voie 416.

Le système d'émission/ réception représenté permet d'effectuer des mesures en réception DCS alors que le mobile est en communication en mode UMTS compressé. Plus précisément, le diplexeur 415 autorise simultanément une réception en mode DCS à travers le commutateur 440 et une transmission en mode UMTS à travers le duplexeur 430. Ainsi, il sera possible d'effectuer les mesures tout en continuant à transmettre normalement sur la voie montante UMTS, le mode compressé n'affectant alors que la voie UMTS descendante. Si les voies du duplexeur 410 sont pourvues de commutateurs, on réduira avantageusement les pertes dans ce mode de fonctionnement en ouvrant le commutateur sur la sortie 412.

En outre, le système d'émission/ réception représenté permet, comme dans l'état de la technique, d'effectuer des mesures en réception GSM alors que le mobile est en communication en mode UMTS compressé. Dans ce cas, si les sorties du duplexeur 415 sont munies de commutateurs, celui sur la sortie 417 sera ouvert.

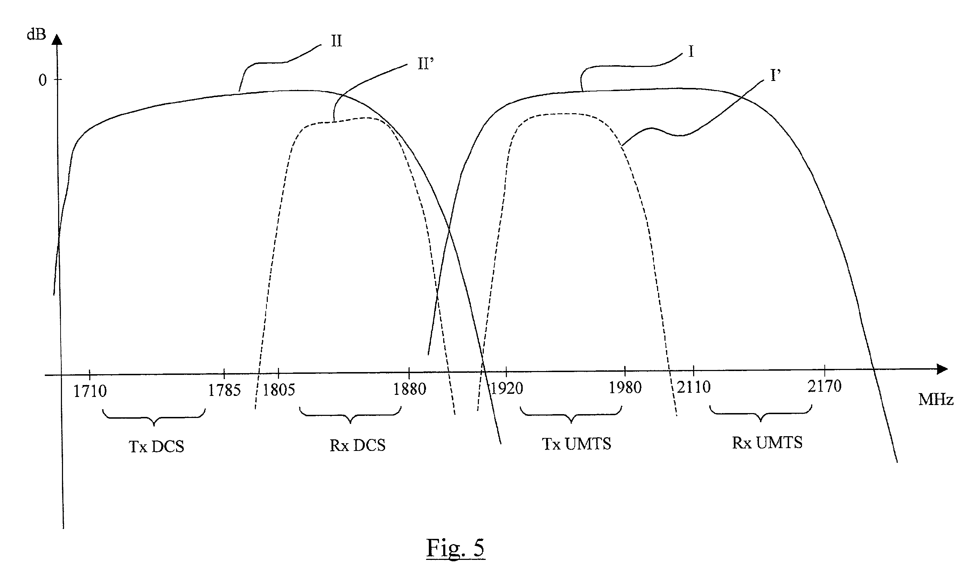

La Fig. 5 représente les caractéristiques des filtres passe-bande du diplexeur 415. On a fait figurer en trait continu la caractéristique I du filtre associé à la voie 416 (bande UMTS) et la caractéristique II du filtre associé à la sortie 417 (bande DCS).

On sait qu'il est difficile d'obtenir un filtre passe-bande présentant à la fois une bonne sélectivité en fréquence et une caractéristique plate dans la bande passante. Afin de pallier cette difficulté, dans une seconde variante de réalisation, les filtres passe-bande associés aux sorties 416 et 417 ont des caractéristiques commutables. Si le système fonctionne en mode UMTS seul ou en mode DCS seul, les caractéristiques des filtres en question sont bien celles indiquées par I et II. En revanche, si l'on souhaite effectuer des mesures de réception DCS en mode UMTS compressé, on reconfigure les filtres de sorte que leurs caractéristiques des filtres deviennent celles représentées, à titre d'exemple, en trait interrompu et désignées par I', II'. On assure ainsi à la fois une grande sélectivité, nécessaire en mode compressé (caractéristiques I' et II'), tout en préservant un bon conditionnement des fonctions de transfert en mode UMTS seul ou DCS seul (caractéristiques I et II). Selon une variante de réalisation, la commutation de caractéristiques I vers I' ou II vers II' passe par une réduction du nombre de pôles. Par exemple les caractéristiques I et II pourront être celles d'un filtre à trois pôles et les caractéristiques I' et II' pourront être celles d'un filtre à deux pôles. Dans ce dernier cas, les caractéristiques I' et II' sont relevées par rapport aux caractéristiques I et II.

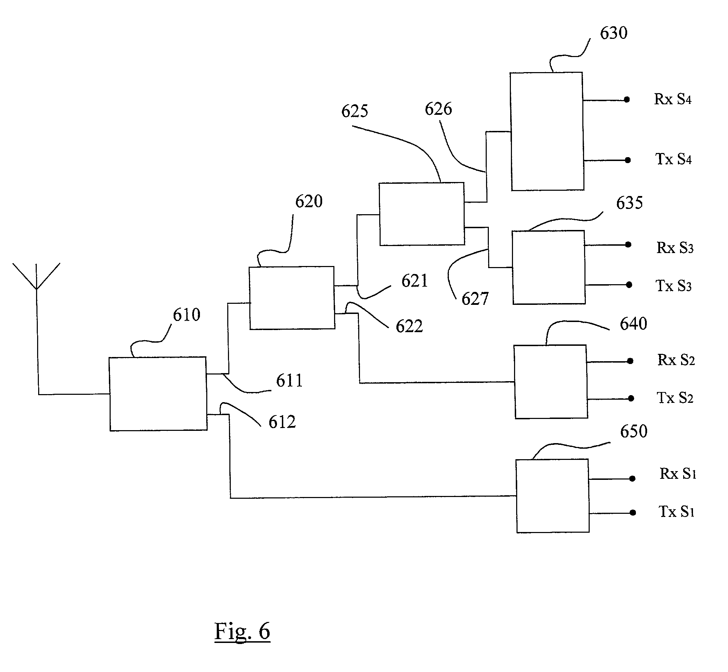

La Fig. 6 illustre un second mode de réalisation de l'invention. Le système représenté diffère de celui de la Fig. 4 en ce qu'il comporte un étage de diplexage supplémentaire. Les diplexeurs 610, 620 et 625 sont montés en cascade, une voie d'un diplexeur étant reliée à la voie commune du diplexeur de l'étage suivant, l'autre sortie étant reliée au point commun d'un commutateur ou la voie commune d'un duplexeur fréquentiel. Ainsi, par exemple, le module 630 est un duplexeur fréquentiel et les modules 635, 640 et 650 sont des duplexeurs temporels (commutateurs « une entrée/deux sorties »). Le choix d'un duplexeur temporel ou fréquentiel dépend du système de téléphonie mobile S₁,.., S₄. Les diplexeurs 610, 620, 625 ont des bandes passantes imbriquées. Plus précisément, la bande passante du filtre associé à la voie 611 contient les bandes passantes des filtres associés aux voies 621 et 622 et la bande passante du filtre associé à la voie 621 contient les bandes passantes des filtres associés aux voies 626 et 627. En outre, les différentes voies des diplexeurs peuvent être équipées de commutateurs de manière à isoler les branches non opérationnelles pour un mode de fonctionnement déterminé et réduire ainsi les pertes. Comme dans le premier mode de réalisation, les filtres passe-bande des différents diplexeurs peuvent être du type à caractéristique commutable, notamment si un mode de fonctionnement particulier nécessite une sélectivité accrue. En tout état de cause, le système représenté permet de transmettre sur une voie Tx Sᵢ et de recevoir simultanément sur une voie Rx Sⱼ où j est égal ou non à i. Le nombre d'étage de diplexage (ici 3) peut être en général quelconque. En pratique, cependant, il sera limité par les pertes à travers la succession des diplexeurs.

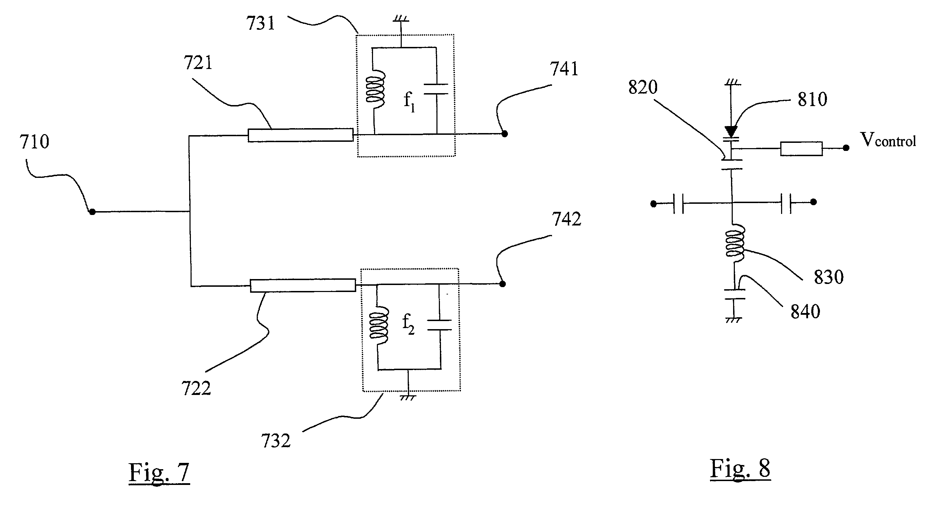

Les diplexeurs utilisés, en particulier ceux qui doivent assurer une bonne sélectivité, (par ex. le diplexeur 415) emploient avantageusement des filtres passe-bande à ondes de surface (SAW) ou diélectriques. La Fig. 7 illustre schématiquement un tel diplexeur. Les filtres 731 et 732 délimités par des lignes fermées en pointillés sont par exemple des filtres SAW (représentés ici sous forme de schéma électrique équivalent) ayant des fréquences de résonnance respectives f₁ et f₂. En outre, le diplexeur comprend une première ligne quart d'onde 721 et une seconde ligne quart d'onde 722 de sorte que l'impédance à la fréquence f₁ de la branche haute vue du point 710 et l'impédance à la fréquence f₂ de la branche basse vue du même point soient trés élevées.

Afin de faire varier les caractéristiques des filtres du diplexeur on peut prévoir d'adjoindre aux filtres SAW, en parallèle ou en série, des capacités et/ou des inductances commutables. Les commutateurs utilisés pourront être constitués de diodes PIN commandées en tension. Alternativement ou conjointement, on pourra adjoindre aux filtres SAW des capacités commandables en tension ou varicaps. La Fig. 8 montre le schéma électrique équivalent d'un filtre SAW en parallèle avec une varicap. La capacité de la diode 810 est commandée par une tension inverse de commande V_{control} et varie alors selon une loi du type k/(V₀+V_{control})^{α} où k, V₀ et α sont des constantes. La capacité 820 permet de bloquer le courant de polarisation. Le circuit résonnant est constitué de la capacité variable de la diode 810, des capacités 820 et 840 ainsi que de l'inductance 830. En faisant varier V_{control} on modifie la fréquence de résonnance du filtre. De même, si une varicap est placée en série avec le filtre SAW, on peut, en faisant varier sa tension de polarisation, modifier la fréquence d'antirésonnance du filtre. Il est ainsi possible de construire un filtre passe-bande à fonction de transfert commutable.

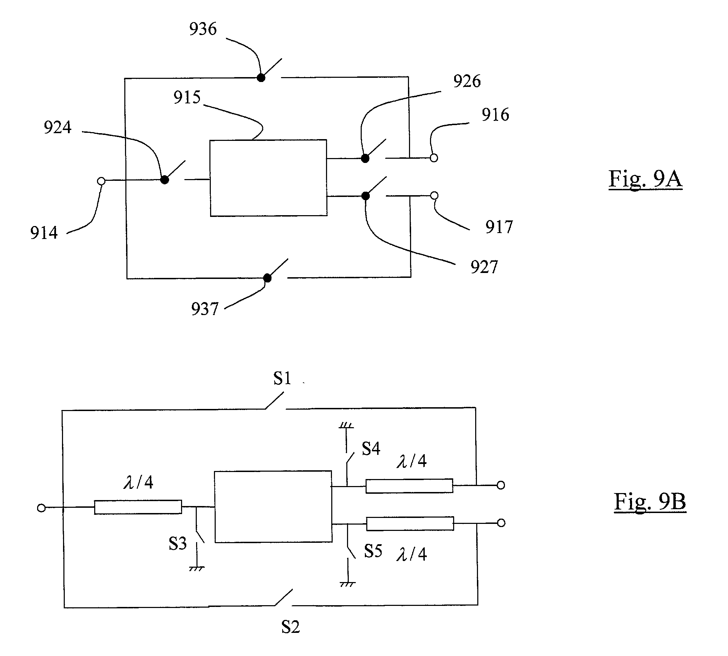

La Fig. 9A représente de manière schématique un diplexeur équipé de commutateurs de type « marche/arrêt » permettant le passage d'un mode de fonctionnement comme indiqué plus haut. Le diplexeur représenté en 915 est par exemple le diplexeur 415 de la Fig. 4. Sur chacune des voies 914, 916, 917 du diplexeur sont placés des commutateurs notés respectivement 924, 926, 927. En outre, deux commutateurs 936 et 937 permettent de court-circuiter la voie commune 914 avec respectivement la première voie 916 et la seconde voie 917.

La Fig. 9B indique un exemple de réalisation du diplexeur équipé de commutateurs de la Fig. 9A. Les éléments S1 à S5 représentés sont des diodes PIN ou des transistors FET. Les commutateurs 924, 926 et 927 sont constitués chacun d'une ligne quart d'onde et d'une diode PIN (ou un transistor FET). Lorsqu'une de ces diodes est polarisée en direct, la faible impédance entre son anode et la masse est transformée en haute impédance par la ligne quart d'onde. La voie correspondante présente une impédance élevée. Récipoquement, lorsque l'un de ces diodes est polarisée en inverse, l'impédance d'entrée de la voie correspondante est faible.

## Revendications

1. Système d'émission/ réception pour un terminal mobile apte à pouvoir émettre et recevoir dans une pluralité de bandes de fréquence, **caractérisé en ce qu'**il comprend une pluralité de diplexeurs (410,415,610,620,625) en cascade, la voie commune du premier diplexeur (410,610) étant connectée à une antenne (400,600) dudit terminal mobile et la voie commune de chaque diplexeur suivant étant connectée à une première voie du diplexeur qui le précède, la seconde voie de chaque diplexeur ainsi que la première voie du dernier diplexeur (415,625) étant connectées à des moyens de duplexage temporel ou fréquentiel (430,440,450,630,635,640,650) assurant l'émission et la réception dans l'une desdites bandes de fréquence.

2. Système d'émission/ réception selon la revendication 1, **caractérisé en ce qu'**au moins l'un desdits diplexeurs présente pour au moins l'une de ses première et seconde voies une fonction de transfert commutable.

3. Système d'émission/ réception selon la revendication 1 ou 2, **caractérisé en ce qu'**il comprend deux diplexeurs en cascade, une première voie (411) du premier diplexeur (410) étant connectée à la voie commune (414) du second diplexeur (415) et une première voie (416) dudit second diplexeur étant connectée à des premiers moyens de duplexage (430) assurant simultanément l'émission et la réception dans une première bande de fréquence, la seconde voie (417) du second diplexeur étant connectée à des seconds moyens de duplexage (440) assurant alternativement l'émission et la réception dans une seconde bande de fréquence et la seconde voie (412) du premier diplexeur (410) étant connectée à des troisièmes moyens de duplexage (450) assurant alternativement l'émission et la réception dans une troisième bande de fréquence.

4. Système d'émission/ réception selon la revendication 3, **caractérisé en ce que** la première bande est la bande d'émission/ réception UMTS, la seconde bande est la bande d'émission/ réception DCS la troisième bande est la bande d'émission/réception GSM.

5. Système d'émission/ réception selon les revendications 2 et 4, **caractérisé en ce que** le second diplexeur présente sur sa première voie une fonction de transfert commutable entre celle (I) d'un premier filtre passe-bande laissant passer la bande UMTS et celle (I') d'un second filtre passe-bande laissant seulement passer la sous-bande de la voie montante UMTS.

6. Système d'émission/ réception selon la revendication 2 et les revendications 4 ou 5, **caractérisé en ce que** le second diplexeur présente pour sa seconde voie une fonction de transfert commutable entre celle (II) d'un troisième filtre passe-bande laissant passer la bande DCS et celle (II') d'un quatrième filtre passe-bande laissant seulement passer la sous-bande de la voie descendante DCS.

7. Système d'émission/ réception selon la revendication 5, **caractérisé en ce que** la fonction de transfert du second diplexeur pour sa première voie est celle du premier filtre passe-bande lorsque le téléphone mobile opère en mode UMTS seul et celle du second filtre passe bande lorsque le télephone mobile opère en mode UMTS compressé.

8. Système d'émission/ réception selon la revendication 6, **caractérisé en ce que** la fonction de transfert du second diplexeur pour sa seconde sortie est celle du troisième filtre passe-bande lorsque le téléphone mobile opère en mode DCS seul et celle du quatrième filtre passe-bande lorsque le terminal mobile opère en mode UMTS compressé.

9. Système d'émission/ réception selon l'une des revendications précédentes, **caractérisé en ce qu'**au moins le second diplexeur est réalisé au moyen de filtres à ondes de surface .

10. Système d'émission/ réception selon l'une des revendications 3 à 8, **caractérisé en ce qu'**au moins le second diplexeur est réalisé au moyen de filtres diélectriques.

11. Système d'émission/ réception selon l'une des revendications précédentes, **caractérisé en ce qu'**au moins l'un desdits diplexeurs est équipé de commutateurs (924,926,927) permettant de déconnecter sa première et/ ou seconde voie et/ou sa voie commune.

12. Système d'émission /réception selon l'une des revendications précédentes, **caractérisé en ce qu'**au moins l'un des diplexeurs est équipé d'un commutateur (936,937) permettant de court-circuiter sa voie commune avec l'une de ses première et seconde voies.
